# EUROPÄISCHE PATENTSCHRIFT

(11) **EP 3 969 673 B1**
(45) Veröffentlichungstag und Bekanntmachung des Hinweises auf die Patenterteilung: **12.07.2023**
(21) Anmeldenummer: 20724494.8
(22) Anmeldetag: 07.05.2020
(51) Int. Cl.: E02F 9/26, E02F 3/30

(54) **VERFAHREN ZUR BERECHNUNG EINES AUSHUBVOLUMENS**
METHOD FOR CALCULATING AN EXCAVATION VOLUME
PROCÉDÉ DE CALCUL D'UN VOLUME D'EXCAVATION

(30) Priorität: 16.05.2019 DE 102019207165
(43) Veröffentlichungstag der Anmeldung: 23.03.2022
(73) Patentinhaber: Robert Bosch GmbH, 70442 Stuttgart (DE)
(72) Erfinder: KRAUSE, Christian, 70176 Stuttgart (DE); SCHLEYER, Markus, 71640 Ludwigsburg (DE); BUCHTALA, Boris, 75417 Muehlacker (DE); ROSE, Steffen, 71638 Ludwigsburg (DE); LIU, Kai, 71679 Asperg (DE); WAGNER, Horst, 89168 Niederstotzingen (DE); HASS, Erik, 76227 Karlsruhe (DE); MANGA, Bilge, 71229 Leonberg (DE)
(86) Internationale Anmeldenummer: PCT/EP2020/062644
(87) Internationale Veröffentlichungsnummer: WO 2020/229278

(56) Entgegenhaltungen:
- EP-A1- 3 438 915
- WO-A1-2013/043087
- WO-A1-2019/049248
- CN-B- 106 836 364

## Beschreibung

Die vorliegende Erfindung betrifft ein Verfahren zur Berechnung eines Aushubvolumens, das von einer Arbeitsmaschine mit einem Werkzeug ausgehoben wurde. Ferner betrifft die Erfindung ein Computerprogramm, das jeden Schritt des Verfahrens ausführt, wenn es auf einem Rechengerät abläuft, sowie ein maschinenlesbares Speichermedium, welches das Computerprogramm speichert. Schließlich betrifft die Erfindung ein elektronisches Steuergerät, welches eingerichtet ist, das erfindungsgemäße Verfahren auszuführen.

### Stand der Technik

Es sind Algorithmen zur Bestimmung der kinematischen Kette bekannt. An jedem Glied des Werkzeugarms ist hierfür einer oder mehrere der folgenden Sensoren inertiale Messeinheit (IMU, inertial measuring unit), Winkelsensoren, Linearsensoren angeordnet, welche Sensordaten an ein Rechengerät senden. Die so ermittelten Sensordaten werden für jeden Sensor individuell gefiltert und zur Zustandsschätzung der Orientierung des jeweiligen Sensors relativ zu einem ortsfesten Inertialkoordinatensystem fusioniert. Ein solcher Algorithmus wird bei der Tool Center Point Estimation verwendet. Die Tool Center Point Estimation ist ein Algorithmus zur Zustandsschätzung von Orientierung und Position eines Endeffektors. Der Endeffektor ist insbesondere ein Werkzeug oder ein Teil eines Werkzeugs, das einen Werkzeugarm mit mehreren Gliedern, die über Gelenke verbunden sind, aufweist. Ein Verfahren gemäß dem Stand der Technik ist in WO2013/043087 A1 offenbart.

Typischerweise verwendete Verfahren sind in der Abhandlung von Nikolas Trawny und Stergios I. Roumeliotis. "Indirect Kalman filter for 3D attitude estimation" University of Minnesota, Dept. of Comp. Sci. & Eng., Tech. Rep 2 (2005), in der Abhandlung von Robert Mahony, Tarek Hamel, und Jean-Michel Pflimlin, "Nonlinear complementary filters on the special orthogonal group", IEEE Transactions on automatic control 53.5 (2008): 1203-1218, sowie in der Abhandlung von Sebastian Madgwick, "An efficient orientation filter for inertial and inertial/magnetic sensor arrays" Report x-io and University of Bristol (UK) 25 (2010), beschrieben, auf die insoweit verwiesen wird.

Aus der so geschätzten Orientierung des Sensors wird zunächst die Orientierung des Glieds, an dem der Sensor angeordnet ist, bestimmt. Dies wird für alle Glieder des Werkzeugarms durchgeführt. Aus der relativen Orientierung zweier aufeinanderfolgender Glieder lässt sich bei bekannter Kinematik (zum Beispiel bei bekannten Denavit-Hartenberg Parametern) der Gelenkwinkel des Gelenks, das die beiden Glieder verbindet, berechnen. Sind schließlich alle Gelenkwinkel und die Maße der Glieder bekannt, folgt die gesamte Konfiguration des Werkzeugarms direkt aus der Vorwärtskinematik und somit die Orientierung und Position des Endeffektors.

Für eine detaillierte Beschreibung wird auf die Abhandlung von Mark W. Spong, Seth Hutchinson und Mathukumalli Vidyasagar, "Robot modeling and control", Vol. 3. New York: Wiley, 2006, verwiesen.

Auf Baustellen wird ein Aufmaß errechnet, welches den Umfang der erbrachten Bauleistungen bezeichnet. Gemäß der Vergabe- und Vertragsordnung im Bauwesen (VOB) Teil B soll das Aufmaß möglichst gemeinsam vom Auftraggeber und Auftragnehmer angefertigt werden. Diese werden meist während des laufenden Betriebs auf der Baustelle aufgenommen, da weiterführende Arbeiten die zuvor Ermittlung des Aufmaßes von vorangegangenen Bauleistungen erschweren, beispielsweise wenn die weiterführenden Arbeiten einen Aushub verdecken. Das Aufmaß ist die Basis für eine Vergütung also die Grundlage für die Erstellung einer Rechnung.

### Offenbarung der Erfindung

Es wird ein Verfahren zur Berechnung eines Aushubvolumens, das von einer Baumaschine mit einem Werkzeug ausgehoben wurde, vorgestellt. Hierbei wird zumindest während des Aushebens eine Bewegungstrajektorie des Werkzeugs über die Zeit mit Hilfe eines oder mehrerer der folgenden Sensoren: Inertiale Messeinheit, Winkelsensor, Linearsensor bestimmt. Die Bewegungstrajektorie stellt die Bewegung des Werkzeugs im Raum über die Zeit dar. Hierfür kann vorzugsweise eine Position eines Punkts am Werkzeug im Raum über die Zeit nachverfolgt werden. Am Beispiel einer Baggerschaufel ist solch ein Punkt eine Schneidkante mit der Material abgetrennt wird.

Das Werkzeug, ein Arbeitsarm, der in Ausführungsformen zwischen dem Werkzeug und der Baumaschine angeordnet ist, und die Baumaschine bilden eine kinematische Kette. Die Sensoren sind wenigstens an zumindest einem Teil des Werkzeugs angeordnet und bevorzugt an jedem Glied der kinematischen Kette zwischen der Baumaschine und dem Werkzeug angeordnet. Inertiale Messeinheiten lassen sich leicht und kostengünstig nachrüsten und können für andere Verfahren verwendet werden.

Vorteilhafterweise wird die Bewegungstrajektorie mittels eines Algorithmus zur Bestimmung der kinematischen Kette zwischen dem Werkzeug und der Baumaschine bestimmt. Bevorzugt wird bei dem Algorithmus zur Bestimmung der kinematischen Kette die Position des obengenannten Punkts am Werkzeug ermittelt und die Veränderung der Position des Punkts im Raum über die Zeit als Bewegungstrajektorie aufgezeichnet. Besonders bevorzugt ist besagter Punkt ein Tool Center Point, d. h. ein Endeffektor der beim Ausheben auf das Material einwirkt, und der Algorithmus eine Tool Center Point Estimation. Der Algorithmus zur Bestimmung der kinematischen Kette basiert auf Sensorsignalen der obengenannten Sensoren.

Die Bewegungstrajektorie des Werkzeugs wird in unterschiedliche Teile aufgeteilt und klassifiziert. Dabei erfolgt das Klassifizieren bzw. die Klassifizierung unmittelbar aus Maschinenbelastungsdaten. Die Klassifizierung ermöglicht es einen Teil der Bewegungstrajektorie, bei der ein Aushub stattgefunden hat (im Folgenden als Aushubtrajektorie bezeichnet), von einem Teil der Bewegungstrajektorie, bei der kein Aushub stattfindet, zu unterscheiden. Wenigstens ein Teil der Bewegungstrajektorie wird mittels der Maschinenbelastungsdaten als Aushubtrajektorie, bei der ein Aushub stattfindet, klassifiziert. Hierfür kann der Zeitpunkt, an dem die Maschinenbelastungsdaten einen Aushub anzeigen, bestimmt werden und aus der Bewegungstrajektorie die Position zu diesem Zeitpunkt als Startposition für die Aushubtrajektorie festgelegt werden. Zudem kann der Zeitpunkt, an dem die Maschinenbelastungsdaten keinen Aushub mehr anzeigen, bestimmt werden und aus der Bewegungstrajektorie die Position zu diesem Zeitpunkt als Endposition für die Aushubtrajektorie festgelegt werden. Die Aushubtrajektorie verläuft dann zwischen der Startposition und der Endposition.

Vorzugsweise umfassen die Maschinenbelastungsdaten physikalische Daten der Baumaschine und/oder des Werkzeugs. Zum Beispiel können die Maschinenbelastungsdaten die vorherrschende Leistung, Lastsprünge, Momentenverläufe, Zeitpunkte von Einspritzungen und/oder Druckverläufe von Ventildrücken von Verbrauchern umfassen. Die Maschinenbelastungsdaten können durch Sensoren, z. B. durch Drucksensoren in den Verbrauchern, ermittelt werden oder sie sind bereits anderweitig ermittelt worden und stehen in einem elektronischen Steuergerät zur Verfügung. Es kann zum Beispiel bei einer Baggerschaufel anhand der Drücke- und Belastungen im Zylinder bestimmt werden, wann der Aushub sattgefunden hat. Die Maschinenbelastungsdaten dienen demzufolge als Kennzeichen für den Aushub durch das Werkzeug. Die Verarbeitung der Daten kann direkt auf dem elektronischen Steuergerät durchgeführt werden. Zusätzlich oder alternativ können auch die Maschinenbelastungsdaten auch Gradienten der genannten Größen sein.

Einerseits kann die Klassifizierung bzw. das Klassifizieren der Bewegungstrajektorie über statische Bedingungen erfolgen. Hierbei werden die Teile der Bewegungstrajektorie unterschieden, wenn eine der zugehörigen Maschinenbelastungsdaten eine Schwelle über- oder unterschreitet. Die Schwellen werden für die Maschinenbelastungsdaten derart gewählt, dass durch Überschreiten ein Aushub gekennzeichnet wird. Alternativ oder zusätzlich können die Schwellen für die Gradienten der Belastung gewählt werden. Zum Beispiel kann die Aushubtrajektorie erkannt werden, wenn der Druck in einem Verbraucher die zugehörige Schwelle überschreitet. Darüber hinaus können weitere Bedingungen berücksichtigt werden, wie z. B. eine aktive Einspritzung eines Verbrennungsmotors. Die Einspritzung des Verbrennungsmotors ist charakteristisch für das an der Kurbelwelle abgegebene Drehmoment. Zusammen mit der Drehzahl ergibt sich eine mechanische Leistung die durch die Pumpen in eine hydraulische Leistung transformiert wird. Antriebszylinder des Arbeitsarms transformieren wiederum die hydraulische Leistung in eine mechanische Leistung des Werkzeugs. Damit ist die Leistung am Werkzeug durch die Leistung am Verbrennungsmotor beobachtbar. Aus der Leistung am Werkzeug und dessen Bewegungsgeschwindigkeit kann die Kraft, die das Werkzeug ausübt, berechnet werden. Wird durch das Erdreich eine Gegenkraft auf das Werkzeug ausgeübt, beispielsweise durch Einstechen oder Losbrechen von Material, kommt es zu einem schnellen Anstieg der Leistungsanforderung. Damit kann festgestellt werden, ob Erdreich abgetragen und bewegt wird oder ob das Werkzeug bewegt wird, ohne Material auszuheben. Der Übergang zwischen diesen Zuständen markiert die aktuelle Erdoberfläche. Neben den oben genannten Größen Einspritzmenge, Druck ist auch eine Kraftmessung am Werkzeug oder an den Gelenken des Arbeitsarms möglich. Hierfür können Kraftsensoren oder Dehnungsmessstreifen vorgesehen sein.

Alternativ können gekoppelte Bedingungen vorgesehen sein, d.h. dass die Bewegungstrajektorien unterschieden werden, wenn mehrere Maschinenbelastungsdaten gleichzeitig die jeweilige Schwelle über- oder unterscheiten und/oder wenn zusätzlich eine oder mehrere der weiteren Bedingungen erfüllt ist. Ein Beispiel für gekoppelte Bedingungen ist, dass die Aushubtrajektorie erkannt wird, wenn der Druck in einem oder mehreren Verbrauchern die Schwelle überschreitet, ein Lastsprung festgestellt wird und gleichzeitig die Einspritzung des Verbrennungsmotors aktiv ist.

Andererseits kann die Klassifizierung der Bewegungstrajektorien durch maschinelles Lernen erfolgen. Hierbei werden die Bewegungstrajektorien anhand von Klassifikatoren unterschieden, die mit im Vorhinein aufgenommenen Referenzsituationen trainiert werden. Hierfür wird vorzugsweise jeder Arbeitsvorgang der Baumaschine aufgezeichnet, beurteilt und in Referenzklassen eingeteilt. Die Bewegungstrajektorien werden dann anhand der Referenzklassen für die Arbeitsvorgänge durch die Klassifikatoren klassifiziert. Für die Klassifizierung werden ein Beginn, ein Ende und eine Dauer des Arbeitsvorgangs bestimmt. Diese Zeitpunkte können zum einen als Trainingsdaten für die Klassifikatoren dienen oder zum anderen mittels obengenannten Bedingungen bestimmt werden.

Bei der Klassifizierung durch maschinelles Lernen können Aktualisierungen vorgesehen sein, beispielsweise in Form von Software-Updates, bei denen individuelle und/oder verbesserte Modelle zur Klassifizierung der Bewegungstrajektorien zu Verfügung gestellt werden. Darüber hinaus können die Ergebnisse der Klassifizierung der Bewegungstrajektorien wiederum als Trainingsdaten dienen, um den Klassifikator zu trainieren. Hierfür ist optional ein zusätzliches Terminal vorgesehen, das zumindest die Bewegung des Werkzeugs aufzeichnet.

Vorteilhafterweise wird beim Klassifizieren der Bewegungstrajektorie mittels der Maschinenbelastungsdaten die Art des Materials, das ausgehoben werden soll, berücksichtigt, denn die Maschinenbelastungsdaten unterscheiden sich je nach Art des ausgehobenen Materials, z. B. Mutterboden, Sandboden, Kies usw. So werden die statischen Bedingungen, insbesondere die Schwellen, abhängig vom auszuhebenden Material gewählt. Beim maschinellen Lernen wird das Material in weiteren Referenzsituationen eintrainiert und die Referenzklassen umfassen Subklassifizierungen, welche das auszuhebende Material berücksichtigen und die Klassifikatoren werden abhängig vom auszuhebenden Material aktiviert.

Ist zumindest eine Aushubtrajektorie bestimmt, so wird das Aushubvolumen unter Einbeziehung der Aushubtrajektorie und der Maße des Werkzeugs berechnet. Das Aushubvolumen gibt das Volumen des entnommenen Materials an, das bei der Bewegung des Werkzeugs entlang der Aushubtrajektorie ausgehoben wird. Das Aushubvolumen wird berechnet, indem die Aushubtrajektorie von der Startposition zu der Endposition als Länge des Aushubvolumens dient und die Breite und Höhe des Aushubvolumens den Maßen des Werkzeugs, am Beispiel einer Baggerschaufel deren Breite und Höhe, entsprechen.

Es kann zudem berücksichtigt werden, dass sich die Aushubtrajektorie abhängig von den Arbeitsvorgängen an bestimmten Positionen relativ zur Baumaschine befinden. Bei einem Bagger als Beispiel liegt die Aushubtrajektorie der Baggerschaufel meist unterhalb der Auflagefläche des Baggers. Bei anderen Anwendungen wird auf andere Weise eine Referenz zu einer oberen Entnahmefläche bestimmt werden. Beispielsweise kann diese Referenz über eine Kombination von vorhandenen Geländemodellen und der Position des Baggers in Weltkoordinaten bestimmt werden Erfolgt die Erdbewegung zum Zweck eines Bauvorhabens, so kann die aktuelle Oberfläche durch ein Geländemodell dargestellt sein und ein Zielzustand des Bauvorhabens durch CAD Modelle in Weltkoordinaten vordefiniert sein. Um die Bewegungstrajektorien in Relation zu den CAD Modellen interpretieren zu können wird die Position des Baggers in Weltkoordinaten angegeben. Durch Koordinatentransformation kann zwischen einer Darstellung des Baggers und/oder des Werkzeugs in körperfesten Koordinaten und Weltkoordinaten gewechselt werden.

Aus den Aushubvolumina für mehrere Arbeitsvorgänge kann vorteilhafterweise ein Aufmaß berechnet werden. Das Aufmaß kann einerseits berechnet werden, indem das Aushubvolumen für diese Arbeitsdurchgänge summiert wird. Andererseits kann das Aufmaß berechnet werden, indem ein Raumintegral für die Aushubvolumen zwischen dem ersten und dem letzten Arbeitsgang berechnet wird. Das Aufmaß bezeichnet den Umfang der erbrachten Bauleistungen. Das Aufmaß kann dadurch während der Ausführung der Bauleistung, direkt nach der Ausführung der Bauleistung oder im Nachhinein ermittelt werden, wenn die Aushubtrajektorien oder die Bewegungstrajektorien sowie die Maschinenbelastungsdaten gespeichert werden. Diese Art das Aufmaß zu ermitteln bietet mehrere Vorteile: Zum einen kann das Aufmaß dadurch automatisch ermittelt werden und muss nicht mehr von Hand vor Ort auf der Baustelle durchgeführt werden. Zum zweiten wird der Ablauf auf einer Baustelle nicht durch das händische Vermessen des Aufmaßes unterbrochen. Stattdessen können Folgearbeiten direkt durchgeführt werden. Zum dritten kann das Aufmaß auch nachträglich erstellt werden, wenn die Aushubtrajektorien oder die Bewegungstrajektorien zusammen mit den Maschinenbelastungsdaten gespeichert werden. Dadurch entfallen ungenaue Schätzungen oder kostenintensive Nachmessungen, wie z. B. Ultraschallmessungen des Erdreichs.

Das Aufmaß kann zur automatisierten Abrechnung des Arbeitsaufwands verwendet werden. Hierfür können die erbrachten Bauleistungen mit einem Leistungsverzeichnis verglichen werden, um den Arbeitsaufwand abzurechnen. Dies bietet den Vorteil, dass die Genauigkeit der Abrechnung erhöht wird, da die tatsächlich ausgeführten Bauleistungen durch eine direkte Aufzeichnung des Aushubs herangezogen werden. Zudem ist das ermittelte Aufmaß rechtlich verbindlich, da insbesondere bei der Tool Center Point Estimation ein zertifiziertes Messverfahren angewendet wird.

Darüber hinaus kann das ermittelte Aushubvolumen in einer virtuellen Karte referenziert werden. Dann kann das Aushubvolumen einem Bediener visualisiert werden. In der virtuellen Karte können zudem eine Geländegeometrie und weitere relevante Informationen, wie z. B. die Lage von Rohrleitungen oder anderer im Boden befindlicher Infrastruktur dargestellt werden. Darüber hinaus kann eine im Vorhinein aufgestellte Arbeitsvorgabe mit dem tatsächlichen Aushubvolumen verglichen werden.

Darüber hinaus kann aus der Bewegungstrajektorie zusätzlich eine Ablageposition von Material bestimmt werden und diese bei der Ermittlung des Aufmaßes verwendet werden. Durch die Kenntnis der Ablageposition und des entsprechenden Transportmittels (z. B. in welchem Lastkraftwagen oder auf welchem Förderband) kann der Materialtransport erfasst und dokumentiert werden. Schließlich kann der Materialtransport, vorzugsweise abhängig vom Materialtyp abgerechnet werden. Je nach Material verändern sich die Kosten. So muss z. B. Bauschutt kostenpflichtig entsorgt werden, während Kies weiter verwendet oder verkauft werden kann.

Vorteilhafterweise weist das Verfahren einen Schritt des Ausgebens eines Steuersignals in Abhängigkeit von dem berechneten Aushubvolumen auf. Das Steuersignal kann an eine Anzeigeeinheit der Baumaschine ausgegeben werden und das Aushubvolumen umfassen, um das Aushubvolumen einem Bediener der Baumaschine anzuzeigen.

Das Computerprogramm ist eingerichtet, jeden Schritt des Verfahrens durchzuführen, insbesondere, wenn es auf einem Rechengerät oder Steuergerät durchgeführt wird. Es ermöglicht die Implementierung des Verfahrens in einem herkömmlichen elektronischen Steuergerät, ohne hieran bauliche Veränderungen vornehmen zu müssen. Hierzu ist es auf dem maschinenlesbaren Speichermedium gespeichert.

Durch Aufspielen des Computerprogramms auf ein herkömmliches elektronisches Steuergerät, wird das elektronische Steuergerät erhalten, welches eingerichtet ist, ein Aushubvolumen zu berechnen.

### Kurze Beschreibung der Zeichnungen

Ausführungsbeispiele der Erfindung sind in den Zeichnungen dargestellt und in der nachfolgenden Beschreibung näher erläutert.
Figur 1 zeigt eine schematische Darstellung einer Baumaschine und eines Aushubvolumens.
Figur 2 zeigt ein Ablaufdiagramm einer Ausführungsform des erfindungsgemäßen Verfahrens.
Figur 3 zeigt ein Ablaufdiagramm einer weiteren Ausführungsform des erfindungsgemäßen Verfahrens.
Figur 4 zeigt ein Ablaufdiagramm gemäß eines Ausführungsbeispiels, das sich an eines der Ablaufdiagramme aus Figur 2 oder Figur 3 anschließt.
Figur 5 zeigt ein weiteres Ablaufdiagramm gemäß eines weiteren Ausführungsbeispiels, das sich an eines der Ablaufdiagramme aus Figur 2 oder Figur 3 anschließt.

### Ausführungsbeispiele der Erfindung

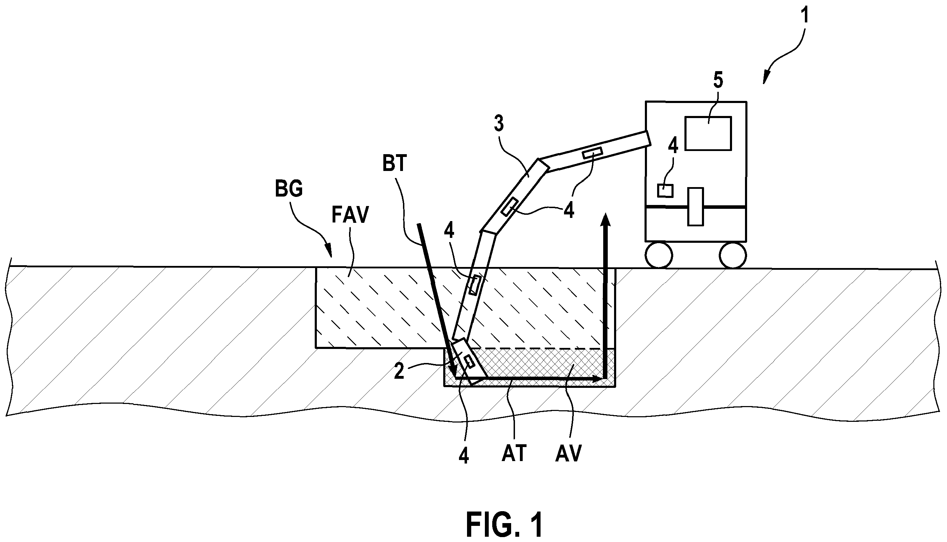

Figur 1 zeigt eine schematische Darstellung einer Baumaschine 1 in Form eines Baggers mit einem als Schaufel ausgebildeten Werkzeug 2. Das Werkzeug 2 ist über einen mehrgliedrigen Arbeitsarm 3 mit der Baumaschine 1 beweglich verbunden. Die Baumaschine 1, der Arbeitsarm 3 und das Werkzeug 2 bilden eine kinematische Kette. An jedem Glied der kinematischen Kette ist jeweils ein inertialer Sensor 4 einer inertialen Messeinheit angeordnet. Die inertialen Sensoren sind mit einem elektronischen Steuergerät 5 verbunden und senden diesem Sensorsignale.

Die Baumaschine 1 hebt mit dem Werkzeug 2 eine Baugrube BG aus. Dabei bewegt sich ein Tool Center Point des Werkzeugs 2 entlang einer Bewegungstrajektorie BT. Der Tool Center Point ist eine Schneidkante Werkzeugs 2 und die Position des Tool Center Points im Raum wird mittels der Sensoren 4 über der Zeit ermittelt und verfolgt. Eine Aushubtrajektorie AT ist Teil der Bewegungstrajektorie BT und zeichnet sich dadurch aus, dass während der Bewegung des Werkzeugs 2 entlang der Aushubtrajektorie AT ein Aushub stattfindet und Material im Werkzeug 2 aufgenommen wird.

Außerdem ist ein Aushubvolumen AV dargestellt, welches durch den Aushub entlang der Aushubtrajektorie vom Werkzeug 2 ausgehoben wird. Folglich wird die Baugrube BG um dieses Aushubvolumen AV erweitert. Das Aushubvolumen AV wird durch das erfindungsgemäße Verfahren, wie nachfolgend gezeigt, berechnet. Neben dem aktuell ausgehobenen AV, sind auch frühere Aushubvolumen FAV gezeigt, durch welche die Baugrube BG entstanden ist.

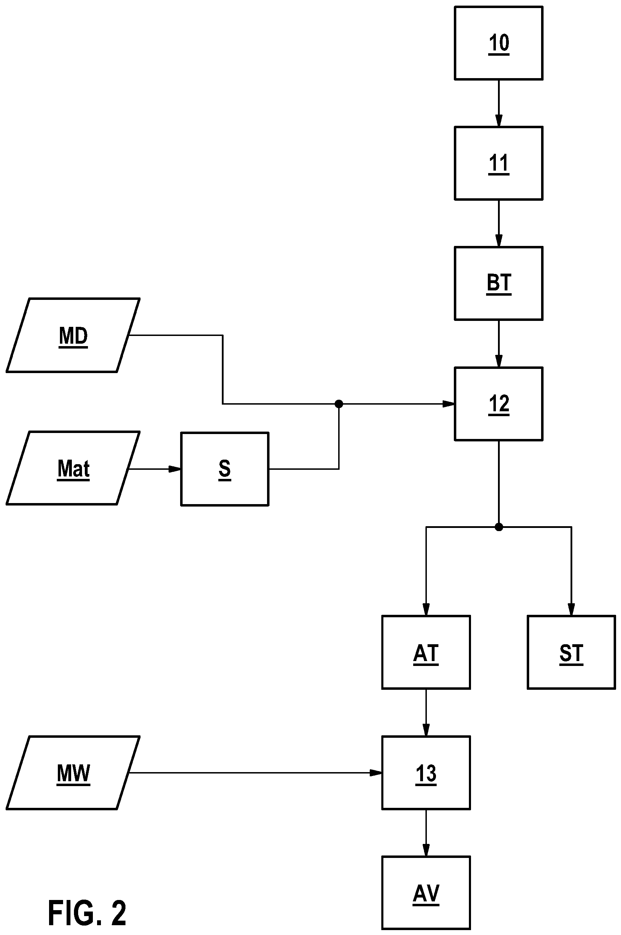

Figur 2 zeigt ein Ablaufdiagramm einer ersten Ausführungsform des erfindungsgemäßen Verfahrens. Zu Beginn und während des ganzen Verfahrens wird die Position des Tool Center Points des Werkzeugs 2 durch die Tool Center Point Estimation als Algorithmus zur Bestimmung der kinematischen Kette bestimmt 10. Hierfür werden die Sensordaten der inertialen Sensoren 4 entlang der kinematischen Kette verwendet und aus der Orientierung und der Position der Glieder werden dann mittels sogenannter Denavit-Hartenberg Parametern (siehe beispielsweise Spong et al. "Robot modeling and control", Vol. 3. New York: Wiley, 2006) die Position und die Orientierung des Werkzeugs 2 im Raum ermittelt. Die Position des Werkzeugs 2, daher des Tool Center Points, wird über die Zeit aufgenommen und daraus eine Bewegungstrajektorie BT des Werkzeugs 2 ermittelt 11.

Im Anschluss erfolgt eine Klassifizierung 12 mittels Maschinenbelastungsdaten MD, die in dieser Ausführungsform mit Hilfe von Schwellen S erfolgt. Bei der Klassifizierung 12 erfolgt eine Unterteilung der Bewegungstrajektorie BT in die Aushubtrajektorie AT, bei welcher ein Aushub stattfindet, und in sonstige Trajektorien ST, bei welchen kein Aushub stattfindet, sondern das Werkzeug 2 beispielsweise in die Baugrube BG oder zu einer Entladestelle (nicht dargestellt) bewegt wird. Die Maschinenbelastungsdaten MD dienen als Kennzeichen für den Beginn, die Dauer und das Ende des Aushubs. Beispiele für die Maschinenbelastungsdaten MD sind eine vorherrschende Leistung, ein Lastsprung, ein Momentenverlauf, ein Zeitpunkt der Einspritzung und/oder ein Druckverlauf von Ventildrücken von Verbrauchern. Die Maschinenbelastungsdaten MD werden zum einen durch weitere Sensoren (hier nicht gezeigt) ermittelt, z. B. bei Ventildrücken durch Drucksensoren in den Verbrauchern. Zum anderen werden die Maschinenbelastungsdaten MD durch andere, an sich bekannte Verfahren ermittelt und stehen im elektronischen Steuergerät 5 zur Verfügung. In diesem Ausführungsbeispiel für eine Baggerschaufel wird anhand der Drücke- und Belastungen im Zylinder bestimmt, wann der Aushub sattgefunden hat. Die Verarbeitung der Maschinenbelastungsdaten MD wird direkt auf dem elektronischen Steuergerät 5 durchgeführt.

Die Schwellen S werden für die Maschinenbelastungsdaten MD derart gewählt, dass ein Überschreiten der Maschinenbelastungsdaten MD den Aushub kennzeichnet. Hierbei können die Schwellen S für Absolutwerte der Maschinenbelastungsdaten MD gewählt werden oder für Gradienten der Maschinenbelastungsdaten MD. Als Beispiele kann je eine Schwelle S für den Druck, das Drehmoment und die Einspritzmenge eines Verbrennungsmotors sowie für den Druckgradient, den Gradient des Drehmoments und den Gradient der Einspritzmenge gewählt werden. Zum einen kann bei der Klassifizierung 12 die Unterscheidung erfolgen, wenn nur eines der Maschinenbelastungsdaten MD die zugehörige Schwelle S überschreitet. Zum Beispiel wird die Aushubtrajektorie AT klassifiziert, wenn der Druck in einem Verbraucher die Schwelle S überschreitet. In weiteren Ausführungsbeispielen können weitere Bedingungen, wie z. B. eine aktive Einspritzung, berücksichtigt werden. Zum anderen kann bei der Klassifizierung 12 die Unterscheidung erfolgen, wenn gekoppelte Bedingungen erfüllt sind. Zum Beispiel wird die Aushubtrajektorie AT klassifiziert, wenn der Druck in einem Verbraucher die Schwelle S überschreitet, ein Lastsprung festgestellt wird und gleichzeitig die Einspritzung aktiv ist. Da die Maschinenbelastungsdaten MD beim Aushub von verschiedenen Materialien, z. B. Mutterboden, Sandboden, Kies usw. unterschiedlich ausfallen, werden die Schwellen S abhängig von der Art des auszuhebenden Materials Mat gewählt.

Die Aushubtrajektorie AT wird im Anschluss in Kombination mit Maßen MW des Werkzeugs 2 für die Berechnung 13 des Aushubvolumens AV, welches entlang der Aushubtrajektorie AT ausgehoben wurde, verwendet. Hierbei dient die Aushubtrajektorie AT als Länge des Aushubvolumens AV und die Breite sowie die Höhe des Aushubvolumens AV entsprechen der Breite und der Höhe des Werkzeugs 2. Auch wenn die in Figur 1 dargestellte Aushubtrajektorie AT gerade verläuft, so ist diese in der Praxis meist gekrümmt. Um das Aushubvolumen AV zu berechnen, kann eine Integration durchgeführt werden.

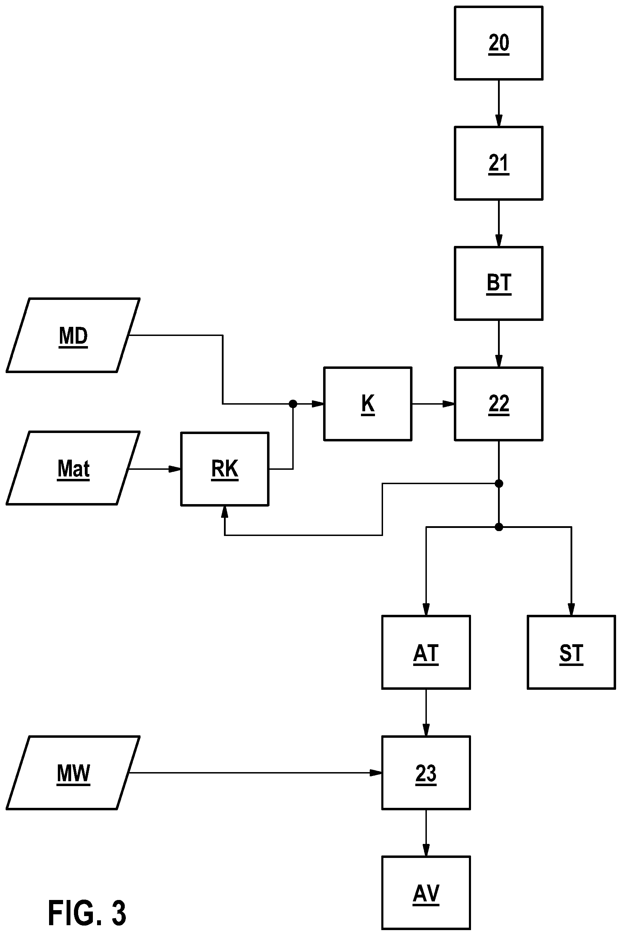

Figur 3 zeigt ein Ablaufdiagramm einer zweiten Ausführungsform des erfindungsgemäßen Verfahrens. In Analogie zum ersten Ausführungsbeispiel wird zu Beginn und während des ganzen Verfahrens in gleicher Weise die Position des Tool Center Points des Werkzeugs 2 durch die Tool Center Point Estimation als Algorithmus zur Bestimmung der kinematischen Kette bestimmt 20. Gleichermaßen wird die Position des Werkzeugs 2, daher des Tool Center Points, über die Zeit aufgenommen und daraus eine Bewegungstrajektorie BT des Werkzeugs 2 ermittelt 21.

Im Anschluss erfolgt eine Klassifizierung 22 mittels Maschinenbelastungsdaten MD, die in diesem Beispiel mit Hilfe eines Klassifikators K durch maschinelles Lernen erfolgt. Auch hier erfolgt bei der Klassifizierung 22 eine Unterteilung der Bewegungstrajektorie BT in die Aushubtrajektorie AT, bei welcher ein Aushub stattfindet, und in sonstige Trajektorien ST, bei welchen kein Aushub stattfindet. Die Maschinenbelastungsdaten MD entsprechen denen des ersten Ausführungsbeispiels und es wird auf dieses verwiesen. Der Klassifikator K wird mit im Vorhinein aufgenommenen Referenzsituationen trainiert. Hierfür wird jeder Arbeitsvorgang der Baumaschine 1 im Vorhinein aufgezeichnet, beurteilt und in Referenzklassen RK eingeteilt. Die Bewegungstrajektorien BT werden dann anhand der Referenzklassen RK für die Arbeitsvorgänge durch den Klassifikator K klassifiziert 22. Für die Klassifizierung 22 werden ein Beginn, ein Ende und eine Dauer des Arbeitsvorgangs bestimmt, wobei diese Zeitpunkte ebenfalls als Trainingsdaten für den Klassifikator K dienen. Da die Maschinenbelastungsdaten MD beim Aushub von verschiedenen Materialien, z. B. Mutterboden, Sandboden, Kies usw. unterschiedlich ausfallen, werden in Vorhinein weitere Referenzsituationen mit verschiedenen auszuhebenden Materialien Mat eintrainiert. Die Referenzklassen umfassen Subklassifizierungen, welche das auszuhebende Material Mat berücksichtigen und die Klassifikatoren werden abhängig vom auszuhebenden Material Mat aktiviert. Nach der Klassifizierung 22 wird das Ergebnis dann wiederrum verwendet, um die Referenzklassen RK zu aktualisieren und somit den Klassifikator K einzulernen.

In Analogie zum ersten Ausführungsbeispiel wird die Aushubtrajektorie AT im Anschluss in Kombination mit Maßen MW des Werkzeugs 2 für die Berechnung 23 des Aushubvolumens AV verwendet. Hierbei dient die Aushubtrajektorie AT als Länge des Aushubvolumens AV und die Breite sowie die Höhe des Aushubvolumens AV entsprechen der Breite und der Höhe des Werkzeugs 2. Auch wenn die in Figur 1 dargestellte Aushubtrajektorie AT gerade verläuft, so ist diese in der Praxis meist gekrümmt. Um das Aushubvolumens AV zu berechnen, kann eine Integration durchgeführt werden.

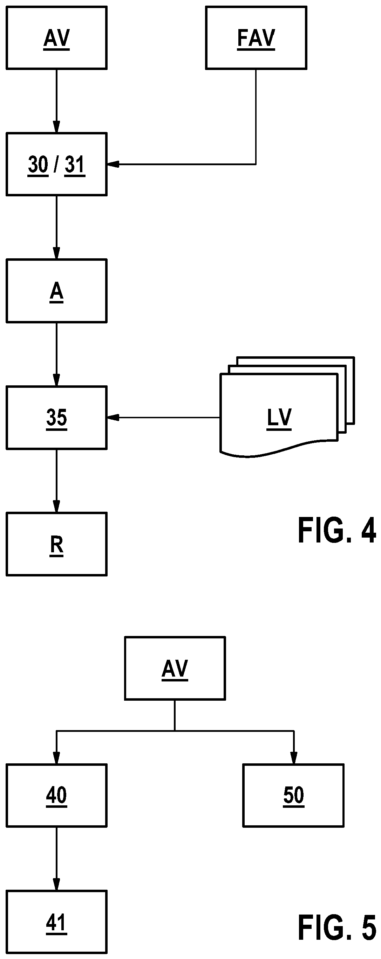

Die Figuren 4 und 5 zeigen jeweils ein Ablaufdiagramm, das an eines der Ablaufdiagramme aus Figur 2 oder Figur 3 anschließt, und sie betreffen erfindungsgemäße Anwendungen des berechneten Aushubvolumens AV. Die nachfolgend beschriebenen Anwendungen können für sich genommen oder in Kombination miteinander ausgeführt werden. Im Ausführungsbeispiel zu Figur 4 wird das Aushubvolumen AV verwendet um automatisiert eine Rechnung R zu erstellen. Hierfür wird das Aushubvolumen AV sowie frühere Aushubvolumen FAV, die mittels demselben Verfahren ermittelt wurden, aufsummiert 30, um ein Aufmaß A zu erhalten. Alternativ wird ein Raumintegral 31 für das Aushubvolumen und die früheren Aushubvolumen zwischen dem ersten und dem letzten Arbeitsgang berechnet, um das Aufmaß A zu erhalten. Das Aufmaß A bezeichnet den Umfang der erbrachten Bauleistungen. Da die obengenannten Daten gespeichert sind, kann das Aufmaß A zum einen während des Aushubs, zum zweiten direkt nach dem Aushub oder im Nachhinein berechnet werden. Im Anschluss wird das Aufmaß A mit einem Leistungsverzeichnis LV verglichen 35, um die erbrachten Bauleistungen abzurechnen. Auf Grundlage des Aufmaßes A und des Vergleichs 35 mit dem Leistungsverzeichnis LV wird die Rechnung R erstellt.

Im Ausführungsbeispiel zu Figur 5 wird das Aushubvolumen AV in einer virtuellen Karte referenziert 40. Die virtuelle Karte wird dann einem Bediener visualisiert 41, beispielsweise an einem Terminal innerhalb einer Fahrerkabine der Baumaschine 1. Dabei werden in der virtuellen Karte eine Geländegeometrie und weitere relevante Informationen, wie z. B. die Lage von Rohrleitungen oder anderer im Boden befindlicher Infrastruktur dargestellt.

Des Weiteren wird das ermittelte Aushubvolumen AV mit einem geplanten Aushubvolumen GAV verglichen 50 und das Ergebnis zur Beurteilung der Genauigkeit, der Effizienz und/oder weiterer Faktoren verwendet.

## Patentansprüche

1. Verfahren zur Berechnung eines Aushubvolumens (AV), das von einer Baumaschine (1) mit einem Werkzeug (2) ausgehoben wurde, **gekennzeichnet durch** folgende Schritte:
- Bestimmen (11, 21) einer Bewegungstrajektorie (BT) des Werkzeugs (2) über die Zeit mit Hilfe eines oder mehrerer der folgenden Sensoren: Inertiale Messeinheit, Winkelsensoren, Linearsensoren;
- Klassifizieren (12, 22) wenigstens eines Teils der Bewegungstrajektorie (BT) mittels Maschinenbelastungsdaten (MD) als Aushubtrajektorie (AT), bei der ein Aushub stattfindet;
- Berechnen (13, 23) des Aushubvolumens (AV) unter Einbeziehung der Aushubtrajektorie (AT) und der Maße (MW) des Werkzeugs (2).

2. Verfahren nach Anspruch 1, **dadurch gekennzeichnet, dass** das Bestimmen (11) der Bewegungstrajektorie (BT) durch einen Algorithmus zur Bestimmung einer kinematischen Kette der Baumaschine (1) erfolgt.

3. Verfahren nach Anspruch 1 oder 2, **dadurch gekennzeichnet, dass** die Maschinenbelastungsdaten (MD) physikalische Daten der Baumaschine (1) und/oder des Werkzeugs (2) umfassen.

4. Verfahren nach einem der vorhergehenden Ansprüche, **dadurch gekennzeichnet, dass** das Klassifizieren (12) über statische Bedingungen erfolgt.

5. Verfahren nach einem der vorhergehenden Ansprüche, **dadurch gekennzeichnet, dass** das Klassifizieren (12) über maschinelles Lernen erfolgt.

6. Verfahren nach einem der vorhergehenden Ansprüche, **dadurch gekennzeichnet, dass** beim Klassifizieren (12) der Bewegungstrajektorie (BT) mittels der Maschinenbelastungsdaten (MD) eine Art des auszuhebenden Materials (Mat) berücksichtigt wird.

7. Verfahren nach einem der vorhergehenden Ansprüche, **dadurch gekennzeichnet, dass** ein Aufmaß (A) berechnet wird, indem das Aushubvolumen (AV, FAV) für mehrere Arbeitsvorgänge der Baumaschine (1) summiert (30) wird

8. Verfahren nach einem der vorhergehenden Ansprüche, **dadurch gekennzeichnet, dass** ein Aufmaß (A) berechnet wird, indem ein Raumintegral (31) für die Aushubvolumen (AV, FAV) zwischen einem ersten und einem letzten Arbeitsgang der Baumaschine (1) berechnet wird.

9. Verfahren nach Anspruch 7 oder 8, **dadurch gekennzeichnet, dass** das Aufmaß (A) zur automatisierten Abrechnung (R) eines Arbeitsaufwands zum Ausheben des ausgehobenen Materials verwendet wird.

10. Verfahren nach einem der vorhergehenden Ansprüche, **gekennzeichnet durch** einen Schritt des Ausgebens eines Steuersignals in Abhängigkeit von dem berechneten Aushubvolumen (AV).

11. Computerprogramm, welches eingerichtet ist, jeden Schritt des Verfahrens nach einem der Ansprüche 1 bis 10 durchzuführen.

12. Maschinenlesbares Speichermedium, auf welchem ein Computerprogramm nach Anspruch 11 gespeichert ist.

13. Elektronisches Steuergerät (5), welches eingerichtet ist, um mittels eines Verfahrens nach einem der Ansprüche 1 bis 10 ein Aushubvolumen (AV) zu berechnen.

## Claims

1. Method for calculating an excavation volume (AV), which was excavated by a construction machine (1) by means of a tool (2), **characterized by** the following steps:
- determining (11, 21) a motion trajectory (BT) of the tool (2) over time with the help of one or several of the following sensors: inertial measuring unit, angle sensors, linear sensors;
- classifying (12, 22) at least a part of the motion trajectory (BT) by means of machine load data (MD) as excavation trajectory (AT), during which an excavation occurs;
- calculating (13, 23) the excavation volume (AV) by including the excavation trajectory (AT) and the dimensions (MW) of the tool (2).

2. Method according to Claim 1, **characterized in that** the determining (11) of the motion trajectory (BT) takes place by means of an algorithm for determining a kinematic chain of the construction machine (1).

3. Method according to Claim 1 or 2, **characterized in that** the machine load data (MD) comprise physical data of the construction machine (1) and/or of the tool (2).

4. Method according to one of the preceding claims, **characterized in that** the classifying (12) takes place via static conditions.

5. Method according to one of the preceding claims, **characterized in that** the classifying (12) takes place via machine learning.

6. Method according to one of the preceding claims, **characterized in that** during the classifying (12) of the motion trajectory (BT) by means of the machine load data (MD), a type of the material (Mat) to be excavated is considered.

7. Method according to one of the preceding claims, **characterized in that** a measurement of quantities (A) is calculated **in that** the excavation volume (AV, FAV) for several operating procedures of the construction machine (1) is summed (30).

8. Method according to one of the preceding claims, **characterized in that** a measurement of quantities (A) is calculated **in that** a space integral (31) for the excavation volumes (AV, FAV) is calculated between a first and a last operating cycle of the construction machine (1).

9. Method according to Claim 7 or 8, **characterized in that** the measurement of quantities (A) is used for the automated billing (R) of an amount of work for excavating the excavated material.

10. Method according to one of the preceding claims, **characterized by** a step of the outputting of a control signal as a function of the calculated excavation volume (AV).

11. Computer program, which is configured to perform each step of the method according to one of Claims 1 to 10.

12. Machine-readable storage medium, on which a computer program according to Claim 11 is stored.

13. Electronic control device (5), which is configured to calculate an excavation volume (AV) by means of a method according to one of Claims 1 to 10.

## Revendications

1. Procédé permettant de calculer un volume d'excavation (AV) qui a été excavé par un engin de chantier (1) équipé d'un outil (2), **caractérisé par** les étapes suivantes consistant à :
- déterminer (11, 21) une trajectoire de mouvement (BT) de l'outil (2) dans le temps à l'aide d'un ou de plusieurs des capteurs suivants : une unité de mesure inertielle, des capteurs angulaires, des capteurs linéaires ;
- classifier (12, 22) au moins une partie de la trajectoire de mouvement (BT) au moyen de données de charge de machine (MD) comme trajectoire d'excavation (AT) selon laquelle une excavation a lieu ;
- calculer (13, 23) le volume d'excavation (AV) en tenant compte de la trajectoire d'excavation (AT) et des dimensions (MW) de l'outil (2).

2. Procédé selon la revendication 1, **caractérisé en ce que** la détermination (11) de la trajectoire de mouvement (BT) est effectuée par un algorithme permettant de déterminer une chaîne cinématique de l'engin de chantier (1).

3. Procédé selon la revendication 1 ou 2, **caractérisé en ce que** les données de charge de machine (MD) comprennent des données physiques de l'engin de chantier (1) et/ou de l'outil (2).

4. Procédé selon l'une quelconque des revendications précédentes, **caractérisé en ce que** la classification (12) est effectuée par l'intermédiaire de conditions statiques.

5. Procédé selon l'une quelconque des revendications précédentes, **caractérisé en ce que** la classification (12) est effectuée par apprentissage machine.

6. Procédé selon l'une quelconque des revendications précédentes, **caractérisé en ce qu'**un type de la matière (Mat) à excaver est pris en considération pour la classification (12) de la trajectoire de mouvement (BT) au moyen des données de charge de machine (MD).

7. Procédé selon l'une quelconque des revendications précédentes, **caractérisé en ce qu'**un cubage (A) est calculé en totalisant (30) le volume d'excavation (AV, FAV) pour plusieurs opérations de l'engin de chantier (1) .

8. Procédé selon l'une quelconque des revendications précédentes, **caractérisé en ce qu'**un cubage (A) est calculé en calculant une intégrale de volume (31) pour le volume d'excavation (AV, FAV) entre une première et une dernière opération de l'engin de chantier (1).

9. Procédé selon la revendication 7 ou 8, **caractérisé en ce que** le cubage (A) est utilisé pour le décompte automatisé (R) d'un effort de travail pour l'excavation de la matière excavée.

10. Procédé selon l'une quelconque des revendications précédentes, **caractérisé par** une étape consistant à sortir un signal de commande en fonction du volume d'excavation (AV) calculé.

11. Programme informatique qui est conçu pour exécuter chaque étape du procédé selon l'une quelconque des revendications 1 à 10.

12. Support de stockage lisible par machine, sur lequel est stocké un programme informatique selon la revendication 11.

13. Appareil de commande électronique (5) qui est conçu pour calculer un volume d'excavation (AV) au moyen d'un procédé selon l'une quelconque des revendications 1 à 10.
